# FASCICULE DE BREVET EUROPEEN

(11) **EP 3 092 719 B1**
(45) Date de publication et mention de la délivrance du brevet: **01.05.2019**
(21) Numéro de dépôt: 14833584.7
(22) Date de dépôt: 15.12.2014
(51) Int. Cl.: H04B 1/10, H04M 1/19

(54) **DISPOSITIF DE FILTRAGE POUR TERMINAL MOBILE PORTABLE PMR, TERMINAL MOBILE**
FILTERVORRICHTUNG FÜR TRAGBARE MOBILE ENDSTATION PMR, MOBILE ENDSTATION
FILTER DEVICE FOR PORTABLE MOBILE TERMINAL PMR, MOBILE TERMINAL

(30) Priorité: 09.01.2014 FR 1450154
(43) Date de publication de la demande: 16.11.2016
(73) Titulaire: Airbus DS SAS, 78990 Elancourt (FR)
(72) Inventeur: LERAUT, Christophe, F-78180 Montigny le Bretonneux (FR); FRAYSSE, Frédéric, F-78210 Saint-Cyr l'Ecole (FR); GEORGEAUX, Eric, F-78180 Montigny le Bretonneux (FR)
(74) Mandataire: Cabinet Camus Lebkiri
(86) Numéro de dépôt international: PCT/FR2014/000279
(87) Numéro de publication internationale: WO 2015/104463

(56) Documents cités:
- EP-A1- 2 536 031
- FR-A1- 2 979 045
- US-A- 5 729 829
- US-B1- 6 469 590

## Description

### DOMAINE

Le domaine de l'invention concerne les terminaux mobiles portables compatibles d'un réseau PMR et des moyens permettant d'améliorer la qualité des transmissions en bande étroite, dite NB, notamment pour la transmission de la voix. Plus précisément, le domaine de l'invention se rapporte aux moyens permettant de rendre un terminal mobile portable PMR immune des interférences provenant des communications en bande large, dite bande BB, pour la transmission haut débit de données lorsque ces bandes sont voisines des bandes étroites de communication d'un réseau PMR.

### ETAT DE L'ART

Il existe aujourd'hui des réseaux dits PMR, désignant dans la terminologie anglo-saxonne : « Private Mobile Radiocommunications ». Ces derniers réseaux trouvent des applications différentes selon les bandes de fréquences accordées et des terminaux mobiles déployés. Ils sont principalement dédiés aux transmissions de voix, mais peuvent également concernés des transmissions de données bas débit.

Une particularité des terminaux déployés d'un réseau PMR est qu'ils sont généralement compatibles d'une large plage de fréquences, généralement beaucoup plus large que la largeur des canaux utilisés pour établir les communications. Les canaux utilisés définissent des bandes dites « bandes étroites ».

On nomme la bande étroite NB la bande « Narrow Band », dans la terminologie anglo-saxonne. Elle correspond à une bande passante étroite correspondant à la bande passante du signal portant les données à transmettre ou à recevoir. Elle ne dépasse pas la bande de cohérence du canal. A titre d'exemple, dans la téléphonie, une bande étroite peut être définie pour transporter la voix dans la bande 300 à 3400 Hz par exemple dans des canaux d'une largeur de 12,5kHz.

Un des problèmes rencontrés aujourd'hui dans la conception des terminaux PMR et de leur large compatibilité est que les signaux dans la bande NB sont perturbés par des signaux dits « large bande » proche d'une bande NB ou recouvrant une bande NB.

On nomme la bande BB, la bande « Broadband » dans la terminologie anglo-saxonne. La bande BB est une bande large en fréquences destinée à la transmission de données haut débit permettant notamment le transport de différents signaux ou porteuses dans ladite bande. Par exemple, une bande BB peut correspondre à une bande de diffusion vidéo. Une bande BB est généralement destinée à des applications 3G ou 4G.

Un problème majeur des terminaux déployés avant la normalisation des bandes BB et le déploiement des réseaux de données haut débit est qu'ils sont aujourd'hui non immunisés des perturbations causées par les transmissions dans les bandes BB proches ou couvrantes partiellement les bandes NB existantes.

Parmi les perturbations des communications dans la bande NB des terminaux PMR, les phénomènes d'interférences et d'intermodulation entre les signaux des deux bandes peuvent survenir.

Actuellement, une solution recommandée lorsqu'une communication d'un terminal PMR est perturbée dans une bande NB par des transmissions dans les bandes BB, est de s'éloigner physiquement de l'émetteur/récepteur BB à proximité du terminal PMR. Cette solution trouve une limitation dans l'usage des terminaux PMR pour l'utilisateur. De plus, les terminaux des deux réseaux NB et BB sont amenés à être co-localisés sur l'utilisateur et à être utilisés simultanément par l'utilisateur.

Il existe des dispositifs de filtrages des bandes BB pour les communications NB de sorte à réduire les interférences causées par les transmissions dans la bande BB, mais ces dernières solutions nécessitent un équipement supplémentaire volumineux, une connectique à l'émetteur/récepteur NB, un déport d'antenne et une alimentation dédiée qui peut être envisageable pour un terminal mobile de véhicule, mais qui n'est pas envisageable pour un terminal mobile portable PMR.

Systèmes connues de l'art antérieure sont divulgués dans US-A-6469590, US-A-5729829 et EP-A-2436031.

### RESUME DE L'INVENTION

L'invention vise à pallier les inconvénients précités.

Un objet de l'invention concerne un dispositif de filtrage selon la revendication 1.

Un avantage est d'obtenir une solution compacte dont le montage est simple. La réutilisation de l'antenne amovible, l'utilisation du connecteur accessoire et la fixation du dispositif de filtrage sur un terminal mobile est rendue simple grâce à l'invention. Le terminal mobile est rendu quasiment insensible aux perturbations causées par les transmissions de données dans les bandes larges proches de la bande NB utilisée.

Le second connecteur radiofréquence est avantageusement identique au connecteur radiofréquence qui reçoit l'antenne amovible du dit terminal mobile pour faciliter la compatibilité de fixations des antennes avec les deux équipements. Une même antenne peut donc être utilisée selon l'utilisation lorsqu'elle est connectée au terminal ou au dispositif de filtrage.

Avantageusement, le premier filtre et/ou le second filtre est un filtre passe-bande dont le gabarit est adapté à l'une des bandes utiles Bᵤ₁ ou Bᵤ₂.

Avantageusement, le premier filtre et/ou le second filtre est un filtre réjecteur de bande dont le gabarit est adapté à l'une des bandes utiles Bᵤ₁ ou Bᵤ₂.

Avantageusement, la seconde voie est utilisée pour émettre des signaux RF provenant du premier connecteur radiofréquence, la sélection de chacune des voies du dispositif de filtrage étant commandée par l'ensemble de commutateurs, les commutateurs étant synchronisés au moyen du signal de synchronisation provenant de l'interface de contrôle.

Dans un mode de réalisation, la seconde voie comprendre comprend un isolateur en fréquences permettant d'isoler la seconde voie des produits d'intermodulation entre les signaux amplifiés émis et les signaux reçus par le dispositif de filtrage.

Avantageusement, chaque voie est utilisée pour émettre et recevoir des signaux RF en provenance ou vers le terminal mobile, la sélection de la voie active en émission et en réception étant déterminée au moyen du signal de synchronisation provenant de l'interface de contrôle.

Avantageusement, le dispositif de filtrage comprend une interface d'alimentation avec le terminal mobile permettant de recevoir un signal d'alimentation permettant d'alimenter au moins un composant dudit dispositif de filtrage.

Avantageusement, les signaux de l'interface d'alimentation et de l'interface de contrôle sont acheminés au moyen d'un même connecteur du dispositif de filtrage.

Avantageusement, le dispositif de filtrage comprend une troisième voie pour la réception d'un signal GPS via l'antenne.

Un autre objet de l'invention concerne un terminal mobile comprenant au moins deux connecteurs RF, dont un premier connecteur permet de fixer une antenne RF pour être compatible d'un réseau PMR ayant une large bande de fréquences en réception B₁ et un second connecteur coopérant avec un connecteur d'un dispositif de filtrage de l'invention.

Avantageusement, le terminal mobile comprend un premier mode dit « mode relayé », le mode relayé définissant une première bande utile Bᵤ₁ pour la réception de signaux et une seconde bande utile Bᵤ₂ pour l'émission de signaux dans la bande B₁, chaque bande utile Bᵤ₁ et Bᵤ₂ étant respectivement affectée à l'une des deux voies du dispositif de filtrage, le terminal mobile émettant un signal de synchronisation vers les premiers et second commutateurs de sorte à sélectionner en temps réel la voie correspondante à l'émission ou la réception en cours.

Avantageusement, le terminal mobile comprend un second mode dit « mode direct», le mode direct définissant une troisième bande utile Bᵤ₃ pour l'émission et la réception de signaux RF, la troisième bande utile Bᵤ₃ étant affectée à l'une des deux voies du dispositif de filtrage, le terminal mobile émettant un signal de synchronisation vers les premiers et second commutateurs de sorte à sélectionner la voie correspondante pour établir la communication.

Avantageusement, le terminal mobile comprend un connecteur accessoire permettant de délivrer un signal d'alimentation au dispositif de filtrage et/ou un signal de synchronisation.

Avantageusement, un tel dispositif de filtrage peut être conçu conjointement à la conception d'un terminal mobile PMR de sorte à obtenir une ergonomie optimisée lorsque ledit dispositif de filtrage est fixé au terminal.

### BREVE DESCRIPTION DES FIGURES

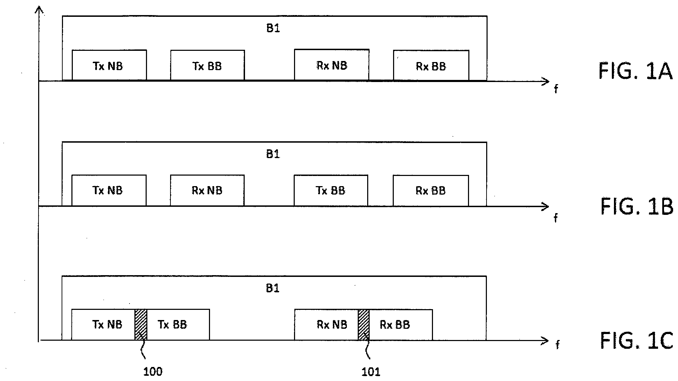

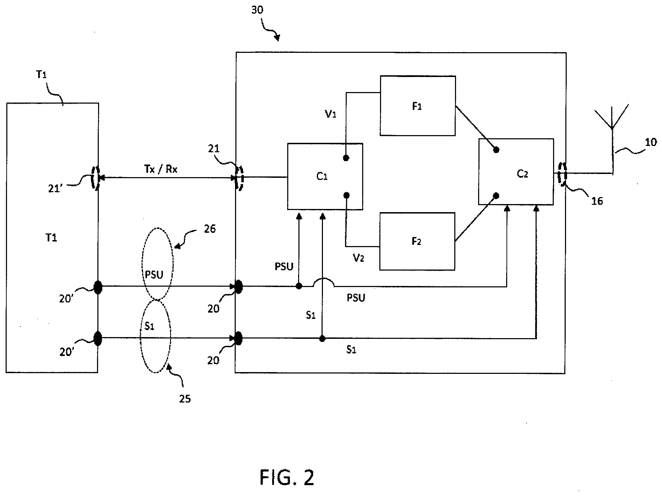

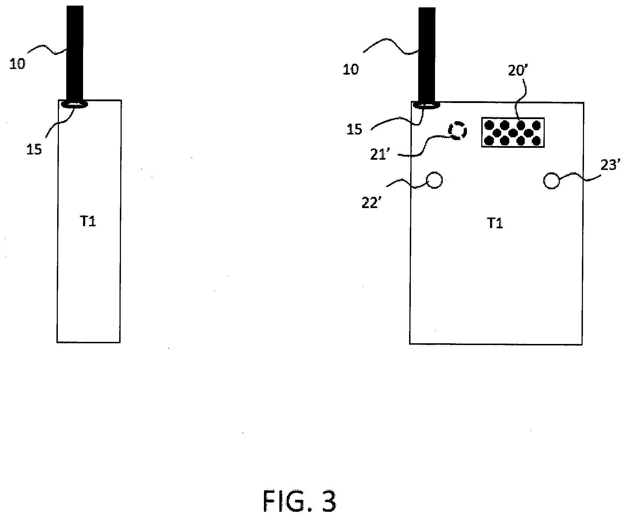

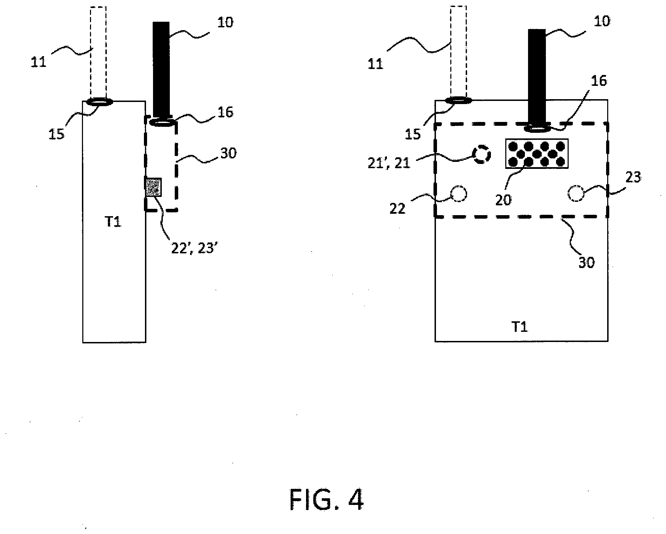

D'autres caractéristiques et avantages de l'invention ressortiront à la lecture de la description détaillée qui suit, en référence aux figures annexées, qui illustrent :
▪ Figures 1A, 1B, 1C : différentes implémentations des bandes NB et BB correspondantes à différentes applications d'un réseau PMR conjointement à un réseau de données haut débit ;
▪ figure 2 : un schéma des interfaces entre le dispositif de filtrage de l'invention et un terminal mobile compatible d'un réseau PMR ;
▪ figure 3 : un terminal mobile adapté à un réseau PMR comprenant les interfaces pour être associé à un dispositif de filtrage de l'invention.
▪ figure 4 : un terminal mobile de l'invention adapté à un réseau PMR comprenant un dispositif de filtrage de l'invention.

### DESCRIPTION

On appelle indifféremment dans la présente invention « une plage de fréquences » ou « une bande de fréquences ».

Dans la présente description, on nomme la bande B₁ une bande de fréquences correspondant à une application d'un réseau PMR. Elle peut correspondre par exemple à la bande 174-230 MHz, dite bande 200 MHz ou encore les bandes [380-399,9 MHz], [406,1-430 MHz] et [440-470 MHz] pour les bandes dites 400MHz. Il existe une pluralité de bandes de fréquences correspondante à différentes applications d'un réseau PMR. La bande B₁ est dans la présente invention une bande comprise dans une large bande allant de 29MHz à 1GHZ.

Selon les configurations et applications d'un réseau PMR, une bande BB et une bande NB peuvent être comprises dans la même bande B1. Le dispositif de filtrage de l'invention permet de filtrer efficacement les signaux de la bande BB susceptibles d'interférer avec les signaux de la bande NB.

Plus particulièrement, la bande NB peut correspondre à une bande dédiée à la voix dans un réseau PMR, qui est un réseau mobile privé de radiocommunication. La bande NB peut également désignée des bandes pour établir des communications GSM ou GPRS.

Les figures 1A à 1C représentent différents cas de figures représentant les bandes NB et BB en réception : Rx NB et Rx BB et en émission : Tx NB et Tx BB dans la bande B1.

Selon une implémentation représentée à la figure 1A, les bandes NB et BB sont entrelacées au sens où les deux bandes Tx NB et Tx BB dédiées à l'émission de données Tx sont proches l'une de l'autre et identiquement pour les deux bandes en réception Rx NB et Rx BB.

Selon une implémentation représentée à la figure 1B, les bandes NB et BB sont adjacentes au sens où les deux bandes Tx NB et Rx NB dédiées à l'émission et la réception de données dans la bande NB sont proches des deux bandes Tx BB et Rx BB.

Selon une implémentation représentée à la figure 1C, il peut arriver que les bandes NB et BB se recouvrent sur des plages 100 aux extrémités de chaque bande dans une configuration de bandes entrelacées telles que celles représentées à la figure 1A.

L'objectif de l'invention est donc de rendre un terminal mobile prévu pour le réseau NB dédié au réseau PMR immune des signaux transmis dans la bande BB. Un objectif de l'invention est de réduire la sensibilité des signaux reçus dans la bande NB aux signaux interférant d'une bande proche BB et des produits d'intermodulations entre les signaux de la bande NB et de la bande BB.

La figure 2 représente un mode de réalisation de l'invention dans lequel les interfaces entre un terminal mobile T₁ d'un réseau PMR et un dispositif de filtrage 30 sont illustrées.

Le dispositif de filtrage 30 de l'invention comprend une interface Tx/Rx radiofréquence permettant la réception et l'émission de signaux RF à destination ou en provenance du terminal mobile T₁. Le dispositif de filtrage 30 de l'invention comprend à cet effet un connecteur RF 21 destiné à coopérer avec un connecteur 21' d'un terminal mobile T₁.

Selon un mode de réalisation, les signaux RF peuvent être soient commutés vers une première voie V₁, soient vers une seconde voie V₂ du dispositif de filtrage 30. Un ensemble de commutateurs C1, C2 permet de réaliser la commutation.

Selon un premier mode de communication appelé le « mode relayé », chaque voie V₁, V₂ du dispositif de filtrage 30 est associée respectivement à une voie en émission V₂ et une voie en réception V₁. La réception des signaux est réalisée par exemple sur la voie V₁ dans une première bande utile notée Bᵤ₁ et l'émission de signaux est alors réalisée sur la voie V₂ dans une seconde bande utile Bᵤ₂.

La première voie V₁, permettant la réception des signaux dans bande Bᵤ₁, comprend au moins un filtre F₁ permettant d'améliorer la réception des fréquences reçues dans la bande Bᵤ₁.

Selon un mode de réalisation, le filtre F₁ peut être un filtre passe-bande centré par exemple autour de la bande utile B_{U1}.

Selon un autre mode de réalisation, le filtre F₁ peut être un filtre réjecteur de bande d'une bande BB proche de la bande Bᵤ₁.

La première voie V₁ peut comprendre également une combinaison de filtres F₁ tels que ceux évoqués, c'est-à-dire un filtre passe-bande et un filtre réjecteur de bande. Les signaux ainsi filtrés sont acheminés au terminal via l'interface Tx/Rx au moyen des connecteurs 21' et 21. Les connecteurs 21' et 21, lorsqu'ils sont connectés entre eux, permettent de réaliser l'interface Tx/Rx permettant de transmettre des signaux du dispositif de filtrage 30 vers le terminal mobile T1 et réciproquement.

Dans ce premier mode de communication, la seconde voie V₂ permet d'émettre les signaux dans une bande utile Bᵤ₂. Les signaux émis proviennent du terminal mobile T₁ et sont acheminés via l'interface Tx/Rx entre les connecteurs 21' et 21.

Selon un mode de réalisation, cette seconde voie V₂ peut comprendre un isolateur non représenté sur les figures de sorte à réduire les produits d'intermodulation produits par l'amplificateur du terminal T₁ dans la bande utile B_{U1} perturbant ainsi la transmission des signaux dans la première voie V₁ de réception.

Pour assurer le passage d'un mode en réception à un mode en émission, les signaux RF à émettre provenant du terminal mobile T₁ sont commutés vers la voie V₂ grâce à un commutateur C₁ de l'ensemble de commutateurs C₁, C₂ du dispositif de filtrage 30.

Un premier commutateur C₁ est agencé à l'entrée des voies V₁ et V₂ et est associé à au moins un second commutateur C₂ en sortie du dispositif de filtrage 30 de sorte à acheminer la voie V₂ devenue active vers l'antenne 10 connectée au dispositif de filtrage 30.

L'entrée des voies V₁ et V₂ est définie comme la partie des voies proches du connecteur RF 21 et la sortie des voies V₁ et V₂ est définie comme la partie des voies située proche de l'antenne 10.

L'antenne 10 permet la réception et l'émission de signaux RF. Elle est préférentiellement identique à l'antenne initialement prévue pour le terminal mobile T₁. Elle est donc adaptée à la réception et l'émission de signaux dans une large bande B₁.

Le commutateur C₁ est piloté au moyen d'un signal de synchronisation S₁ provenant du terminal T₁. En conséquence, selon un mode de réalisation de l'invention le commutateur C₂ en sortie des voies V₁ et V₂ est synchronisé sur le même signal de synchronisation S₁ que le commutateur C₁.

A cet effet, le dispositif de filtrage 30 comprend une interface de contrôle. L'interface de contrôle 25 est réalisée d'une part au moyen d'un connecteur 20 du dispositif de filtrage 30 destinée à coopérer avec un connecteur 20' du terminal mobile T₁. L'interface de contrôle 25 permet l'acheminement d'un signal de synchronisation S₁ généré par le terminal T₁ vers les commutateurs C₁, C₂ du dispositif de filtrage 30. Le signal de synchronisation S₁ est par exemple un signal généré par un calculateur du terminal mobile T₁. Le dispositif de filtrage 30 peut commuter en temps réel entre la voie d'émission V₂ et la voie de réception V₁ de sorte à poursuivre une communication entre au moins deux terminaux comprenant différentes alternances d'émissions et de réceptions de signaux RF.

Les deux commutateurs C₁ et C₂ commutent de manière synchronisée grâce au signal de synchronisation S₁ qui est acheminé à chaque commutateur. Si une pluralité de commutateurs est utilisée, le signal de synchronisation S₁ est acheminé à chaque commutateur supplémentaire implémenté dans les voies V₁, V₂.

Dans ce premier mode de communication, le dispositif de filtrage 30 permet de filtrer les signaux reçus dans la voie V₁ au moyen d'un filtre F₁ et d'acheminer les signaux filtrés vers le terminal mobile T₁. Le dispositif de filtrage 30 de l'invention permet de limiter les perturbations liées aux interférences des signaux ensuite démodulés en bande de base dans le terminal mobile T₁.

La voie V₁ en réception peut comprendre dans un mode de réalisation un amplificateur de sorte à amplifier les signaux reçus avant ou après le filtre F₁.

Selon un mode de réalisation du dispositif de filtrage 30, ce dernier comprend une interface d'alimentation 26. Avantageusement, l'interface d'alimentation 26 peut être distribuée via le même connecteur 20 du dispositif de filtrage 30. Dans ce cas, le connecteur 20 comprend une entrée pour recevoir un signal d'alimentation PSU en provenance du terminal mobile T1. Le signal d'alimentation PSU est alors acheminé vers le connecteur 20 en utilisant une des entrées/sorties du connecteur 20'. Le signal de d'alimentation PSU est, par exemple, un signal provenant d'une connectique de la batterie du terminal mobile T₁. Dans un autre mode de réalisation, l'interface 26 d'alimentation est réalisée aux moyens de connecteurs dédiés entre le dispositif de filtrage 30 et le terminal mobile T₁. Dans le cas décrit et représenté aux figures 2 à 4, le connecteur 20 réalisant l'interface d'alimentation et l'interface de contrôle est le même et identiquement avec le connecteur 20' du terminal mobile T₁.

L'interface d'alimentation 26 permet l'acheminement d'un signal d'alimentation PSU de préférence déjà existant dans le terminal mobile T₁.

Le dispositif de filtrage 30 comprend une connectique interne permettant d'acheminer le signal d'alimentation PSU à tous les composants actifs nécessitant une alimentation dont notamment les commutateurs C₁, C₂.

Lorsque qu'un même connecteur 20 est utilisé pour réunir les interfaces de contrôle 25 et d'alimentation 26, un avantage est de minimiser les développements du dispositif de filtrage 30.

Dans un second mode de communication dit « mode direct », les voies V₁ et V₂ ne sont pas spécifiquement affectées à la réception ou l'émission de données.

Dans le mode direct, chaque voie V₁ et V₂ est capable d'émettre et recevoir des signaux en provenance ou à destination de l'antenne 10. Chaque voie V₁ et V₂ comprend une bande utile propre. Si V₁ comprend une première bande utile par exemple Bᵤ₁, la bande utile de la seconde voie V₂ peut être notée Bᵤ₃. Nommons B_{H} la bande la plus haute et B_{L} la bande la plus basse, chacune des bandes étant affectée à l'une des voies V₁, V₂. Chacune de ces bandes utiles est commune en fréquences dans la bande B1 pour l'émission et la réception de données pour une voie.

Ce mode de communication est par exemple compatible des communications « Push to talk » ou également appelé « Press to transmit ». Ces dernières peuvent être compatible d'une émission et d'une transmission dans le même canal à l'aide d'une connectique permettant de déterminer si la voie est en émission ou en réception. La détermination de la voie V₁, V₂ utilisée peut être réalisée en début de communication par l'émission d'un signal de synchronisation du terminal mobile vers le dispositif de filtrage 30. Le signal de synchronisation S₁ permet alors de sélectionner la voie V₁ ou V₂ adéquate pour établir la communication half duplex.

Selon le mode de communication envisagée, direct ou relayé et le statut des communications parmi lesquels : « pas de communication », « émission », « réception », le dispositif de filtrage 30 est capable de délivrer un signal d'alimentation PSU adapté à la puissance requise de chaque alimentation des composants. Le terminal mobile T₁ pilote le signal d'alimentation PSU et son niveau en fonction du mode de communication et du statut du terminal. Des niveaux de signaux d'alimentation pouvant être utilisés dans l'invention correspondent par exemple à des alimentations de 3,3V ou 1, 8V.

La figure 3 représente un terminal mobile PMR T₁ qui est adapté à coopérer avec un dispositif de filtrage 30 de l'invention. Le terminal mobile T₁ comprend une antenne 10 et un connecteur RF 15 permettant de fixer et retirer l'antenne 10 amovible. Le terminal T₁ est adapté à coopérer avec un dispositif de filtrage 30 en ce qu'il comprend un second connecteur RF 21' de préférence situé sur la partie arrière du bâti du terminal mobile T₁. Cette même partie arrière du bâti du terminal mobile T₁, qui constitue son dos, comprend en outre des moyens de fixations 22', 23' qui permettent de fixer un dispositif de filtrage 30 de l'invention à l'arrière du terminal mobile T₁. La figure 3 représente également à l'arrière du terminal mobile T₁ un connecteur 20' comprenant une pluralité d'entrées/ sorties dont notamment les interfaces d'alimentation 26 et de contrôle 25 permettant d'acheminer les signaux d'alimentation PSU et de synchronisation S₁ vers le dispositif de filtrage 30.

La figure 4 représente un terminal mobile T₁ auquel est fixé un dispositif de filtrage 30 de l'invention par des moyens de fixations 22 et 23 compatibles des moyens 22' et 23' du terminal mobile T₁.

Le connecteur 20 du dispositif de filtrage 30 est adapté à coopérer mécaniquement avec le connecteur 20' du terminal mobile T₁.

Une particularité du dispositif de filtrage 30 est que sa sortie antenne RF 16 est identique à la sortie antenne 15 du terminal mobile T1. L'antenne 10 amovible peut être retirée de la connectique 15 pour être connecté directement au dispositif de filtrage 30. Ce qui constitue un avantage de montage du dispositif de filtrage sur un terminal mobile T₁.

Selon un mode de l'invention, le connecteur 20 de contrôle est agencé à proximité du connecteur RF 21 de sorte à améliorer la compacité du montage du dispositif de filtrage 30 sur le terminal mobile T1.

Selon un mode de l'invention les moyens de fixations 22' et 23' sont les moyens de fixation utilisés pour les clips d'accroche du terminal T1 à une ceinture. De ce fait, les moyens de fixations 22, 23 du dispositif de filtrage sont compatibles de ces clips.

Selon un mode de réalisation, la conception mécanique du dispositif de filtrage 30 est adaptée à assurer une continuité mécanique du terminal mobile. En outre, la conception du dispositif de filtrage 30 peut être réalisée de sorte à assurer une prise en main du terminal mobile T₁ avec une seule main.

Selon un mode de réalisation, le dispositif de filtrage 30 comprend une troisième voie destinée à la réception d'un signal GPS. Cette troisième voie est connectée à l'antenne 10 et délivre le signal GPS reçu vers le connecteur RF 21 pour l'acheminer vers le terminal mobile T₁. La troisième voie peut comprendre un élément de filtrage passe-bande ou réjecteur de bande permettant de traiter le signal reçu pour optimiser le résultat de démodulation et améliorer la sensibilité du récepteur.

Selon un mode de réalisation, le dispositif de filtrage 30 peut comprendre un accessoire audio de type micro-poire. Dans ce cas, une interface ad-hoc peut être ajoutée dans l'interface de contrôle. L'entrée /sortie audio peut alors être comprise dans les interfaces du connecteur 20 du dispositif de filtrage 30 pour être connecté au connecteur 20' du terminal mobile T1.

## Revendications

1. Dispositif de filtrage (30) adapté à être connecté à un terminal mobile portable (T₁) compatible d'un réseau Private Mobile Radiocommunications PMR ayant une plage de fréquences en réception B₁, ledit dispositif comprenant des moyens de fixation (22, 23) audit terminal mobile (T₁), un premier connecteur radiofréquence (21) adapté à coopérer avec un connecteur radiofréquence (15) du terminal mobile (T₁), une première voie (V₁) comprenant un premier filtre (F₁) permettant de réduire les interférences dans une première bande utile Bᵤ₁ au moins en réception comprise dans la bande B₁ et un second connecteur radiofréquence (16) destiné à coopérer avec l'antenne RF (10) amovible, pour transmettre ou recevoir les signaux radiofréquences, **caractérisé en ce qu'**il comprend en outre :
▪ une seconde voie (V2) comprenant un second filtre (F2) permettant de réduire les interférences dans une seconde bande utile Bᵤ₂ en émission ou en réception, ladite seconde bande utile Bᵤ₂ étant comprise dans la première bande B₁
▪ une interface de contrôle (25, 20) adaptée à coopérer avec un connecteur (20') du terminal mobile (T1), l'interface de contrôle (25, 20) délivrant une donnée de synchronisation (S1) permettant d'activer un ensemble de commutateurs (C1, C2) engageant le basculement de la première voie (V1) vers la seconde voie (V2) et réciproquement.

2. Dispositif de filtrage (30) selon la revendication 1, **caractérisé en ce que** le premier filtre (F₁) et/ou le second filtre (F₂) est un filtre passe-bande dont le gabarit est adapté à l'une des bandes utiles Bᵤ₁ ou Bᵤ₂.

3. Dispositif de filtrage (30) selon la revendication 1, **caractérisé en ce que** le premier filtre (F₁) et/ou le second filtre (F₂) est un filtre réjecteur de bande d'une bande proche de l'une des bandes utiles Bᵤ₁ ou Bᵤ₂.

4. Dispositif de filtrage (30) selon l'une quelconque des revendications 1 à 3, **caractérisé en ce que** la seconde voie (V₂) est utilisée pour émettre des signaux RF provenant du premier connecteur radiofréquence (21', 21), la sélection de chacune des voies (V₁, V₂) du dispositif de filtrage (30) étant commandée par l'ensemble de commutateurs (C₁, C₂), les commutateurs étant synchronisés au moyen du signal de synchronisation (S₁) provenant de l'interface de contrôle (25).

5. Dispositif de filtrage (30) selon la revendication 4, **caractérisé en ce que** la seconde voie (V₂) comprend un isolateur en fréquences permettant d'isoler la seconde voie (V₂) des produits d'intermodulation entre les signaux amplifiés émis et les signaux reçus par le dispositif de filtrage (30).

6. Dispositif de filtrage (30) selon l'une quelconque des revendications 1 à 5, **caractérisé en ce que** chaque voie (V₁, V₂) est utilisée pour émettre et recevoir des signaux RF en provenance ou vers le terminal mobile (T₁), la sélection de la voie active (V₁, V₂) en émission et en réception étant déterminé au moyen du signal de synchronisation (S₁) provenant de l'interface de contrôle (25).

7. Dispositif de filtrage (30) selon l'une quelconque des revendications 1 à 6, **caractérisé en ce qu'**il comprend une interface d'alimentation (26) avec le terminal mobile (T₁) permettant de recevoir un signal d'alimentation (PSU) permettant d'alimenter au moins un composant (C1, C2) dudit dispositif de filtrage (30).

8. Dispositif de filtrage (30) selon la revendication 7, **caractérisé en ce que** les signaux de l'interfaces d'alimentation (26) et de l'interface de contrôle (25) sont acheminées au moyen d'un même connecteur (20) du dispositif de filtrage (30).

9. Dispositif de filtrage (30) selon l'une quelconque des revendications 1 à 8, **caractérisé en ce qu'**il comprend une troisième voie pour la réception d'un signal GPS via l'antenne (10).

10. Terminal mobile (T₁) **caractérisé en ce qu'**il comprend au moins deux connecteurs RF (15, 21'), dont un premier connecteur (15) permet de fixer une antenne RF (11, 10) pour être compatible d'un réseau PMR ayant une bande de fréquences en réception B₁ et un second connecteur (21') adapté à coopérer avec un connecteur (21) d'un dispositif de filtrage (30) selon l'une quelconque des revendications 1 à 9.

11. Terminal mobile (T₁) selon la revendication 10, **caractérisé en ce qu'**il comprend un premier mode dit « mode relayé », le mode relayé définissant une première bande utile Bᵤ₁ pour la réception de signaux et une seconde bande utile Bᵤ₂ pour l'émission de signaux dans la bande B₁, chaque bande utile Bᵤ₁ et Bᵤ₂ étant respectivement affectée à l'une des deux voies (V₁, V₂) du dispositif de filtrage (30), le terminal mobile (T₁) émettant un signal de synchronisation (S₁) vers les premiers et second commutateurs (C1, C2) de sorte à sélectionner en temps réel la voie correspondante à l'émission ou la réception en cours.

12. Terminal mobile (T₁) selon la revendication 10, **caractérisé en ce qu'**il comprend un second mode dit « mode direct», le mode direct définissant une troisième bande utile Bᵤ₃ pour l'émission et la réception de signaux RF, la troisième bande utile Bᵤ₃ étant affectée à l'une des deux voies (V₁, V₂) du dispositif de filtrage (30), le terminal mobile (T₁) émettant un signal de synchronisation (S₁) vers les premiers et second commutateurs (C1, C2) de sorte à sélectionner la voie correspondante pour établir la communication.

13. Terminal mobile (T₁) selon l'une quelconque des revendications 10 à 12, **caractérisé en ce qu'**il comprend un connecteur accessoire (20') permettant de délivrer un signal d'alimentation (PSU) au dispositif de filtrage (30).

## Patentansprüche

1. Filtervorrichtung (30), die geeignet ist, an ein tragbares mobiles Terminal (T₁) angeschlossen zu sein, das mit einem Netz Private Mobile Funkkommunikationen PMR mit einem Empfangsfrequenzbereich B₁ kompatibel ist, wobei die genannte Vorrichtung Befestigungsmittel (22, 23) an dem genannten mobilen Terminal (T₁), einen ersten Funkfrequenzstecker (21), der zum Zusammenwirken mit einem Funkfrequenzstecker (15) des mobilen Terminals (T₁) geeignet ist, eine erste Spur (V₁), umfassend einen ersten Filter (F₁), der das Reduzieren der Interferenzen in einem ersten Arbeitsbereich Bᵤ₁ wenigstens beim in dem Bereich B₁ inbegriffenen Empfang zulässt, und einen zweiten Funkfrequenzstecker (16), der zum Zusammenwirken mit der abnehmbaren Antenne RF (10) bestimmt ist, um die Funkfrequenzsignale zu übertragen oder zu empfangen, umfasst, **dadurch gekennzeichnet, dass** sie darüber hinaus umfasst:
• eine zweite Spur (V2), umfassend einen zweiten Filter (F2), der das Reduzieren der Interferenzen in einem zweiten Arbeitsbereich Bᵤ₂ beim Senden oder beim Empfang zulässt, wobei der genannte zweite Arbeitsbereich Bᵤ₂ in dem ersten Bereich B₁ inbegriffen ist;
• eine Steuerschnittstelle (25, 20), die geeignet ist, mit einem Stecker (20') des mobilen Terminals (T1) zusammenzuwirken, wobei die Steuerschnittstelle (25, 20) eine Synchronisationsangabe (S1) ausgibt, die das Aktivieren einer Umschaltgruppe (C1, C2) zulässt, die das Umschalten der ersten Spur (V1) zu der zweiten Spur (V2) und umgekehrt einleitet.

2. Filtervorrichtung (30) gemäß Anspruch 1, **dadurch gekennzeichnet, dass** der erste Filter (F1) und / oder der zweite Filter (F2) ein Bandpass-Filter ist, dessen Größe an einen der Arbeitsbereiche Bᵤ₁ oder Bᵤ₂ angepasst ist.

3. Filtervorrichtung (30) gemäß Anspruch 1, **dadurch gekennzeichnet, dass** der erste Filter (F1) und / oder der zweite Filter (F2) ein Bandsperren-Filter eines Bereichs nahe eines der Arbeitsbereiche Bᵤ₁ oder Bu2 ist.

4. Filtervorrichtung (30) gemäß irgendeinem der Ansprüche 1 bis 3, **dadurch gekennzeichnet, dass** die zweite Spur (V₂) verwendet ist, um Signale RF auszugeben, die aus dem ersten Funkfrequenz-Stecker (21', 21) stammen, wobei die Auswahl jeder Spur (V₁, V₂) der Filtervorrichtung (30) von der Umschaltergruppe (C₁, C₂) gesteuert ist, wobei die Umschalter mittels des Synchronisationssignals (S₁) synchronisiert sind, das aus der Steuerschnittstelle (25) stammt.

5. Filtervorrichtung (30) gemäß Anspruch 4, **dadurch gekennzeichnet, dass** die zweite Spur (V₂) einen Frequenzisolator umfasst, der das Isolieren der zweiten Spur (V₂) von den Intermodulationsprodukten zwischen den ausgegebenen verstärkten Signalen und den von der Filtervorrichtung (30) empfangenen Signalen zulässt.

6. Filtervorrichtung (30) gemäß irgendeinem der Ansprüche 1 bis 5, **dadurch gekennzeichnet, dass** jede Spur (V₁, V₂) verwendet ist, um Signale RF auszugeben und zu empfangen, die aus dem mobilen Terminal (T₁) stammen oder dorthin ausgegeben sind, wobei die Auswahl der aktiven Spur (V₁, V₂) beim Senden und Empfangen mittels des aus der Steuerschnittstelle (25) stammenden Synchronisationssignals (S₁) bestimmt ist.

7. Filtervorrichtung (30) gemäß irgendeinem der Ansprüche 1 bis 6, **dadurch gekennzeichnet, dass** sie eine Versorgungsschnittstelle (26) mit dem mobilen Terminal (T₁) umfasst, die das Empfangen eines Versorgungssignals (PSU) zulässt, das das Versorgen wenigstens eines Bestandteils (C1, C2) der genannten Filtervorrichtung (30) zulässt.

8. Filtervorrichtung (30) gemäß Anspruch 7, **dadurch gekennzeichnet, dass** die Signale der Versorgungsschnittstellen (26) und der Steuerschnittstelle (25) mittels eines und desselben Steckers der Filtervorrichtung (30) weitergeleitet sind.

9. Filtervorrichtung (30) gemäß irgendeinem der Ansprüche 1 bis 8, **dadurch gekennzeichnet, dass** sie eine dritte Spur für den Empfang eines Signals GPS über die Antenne (10) umfasst.

10. Mobiles Terminal (T₁), **dadurch gekennzeichnet, dass** es wenigstens zwei Stecker RF (15, 21') umfasst, von denen ein erster Stecker (15) das Befestigen einer Antenne RF (11, 10) zulässt, um mit einem Netz PMR kompatibel zu sein, das einen Frequenzbereich für den Empfang B1 und einen zweiten Stecker (21') aufweist, der geeignet ist, um mit einem Stecker (21) einer Filtervorrichtung (30) gemäß irgendeinem der Ansprüche 1 bis 9 zusammenzuwirken.

11. Mobiles Terminal (T₁) gemäß Anspruch 10, **dadurch gekennzeichnet, dass** es einen ersten Modus, bezeichnet als "weitergeleiteter Modus" umfasst, wobei der weitergeleitete Modus einen ersten Arbeitsbereich Bᵤ₁, der für den Empfang von Signalen nützlich ist, und einen zweiten Arbeitsbereich Bᵤ₂ für den Empfang von Signalen in dem Bereich B₁ definiert, wobei jeder Bereich Bᵤ₁ und Bᵤ₂ jeweils einer der beiden Spuren (V₁, V₂) der Filtervorrichtung (30) zugeordnet ist, wobei das mobile Terminal (T₁) ein Synchronisationssignal (S₁) zu den ersten und zweiten Umschaltern (C1, C2) derart ausgibt, dass die der laufenden Ausgabe oder dem laufenden Empfang entsprechende Spur ausgewählt ist.

12. Mobiles Terminal (T₁) gemäß Anspruch 10, **dadurch gekennzeichnet, dass** es einen zweiten Modus umfasst, bezeichnet als "direkter Modus", wobei der direkte Modus einen dritten Arbeitsbereich Bᵤ₃ für die Ausgabe und den Empfang von Signalen RF definiert, wobei der dritte Arbeitsbereich Bᵤ₃ einer der zwei Spuren (V₁, V₂) der Filtervorrichtung (30) zugeordnet ist, wobei das mobile Terminal (T₁) ein Synchronisationssignal (S₁) zu den ersten und zweiten Umschaltern (C₁, C₂) derart ausgibt, dass die entsprechende Spur zum Herstellen der Kommunikation ausgewählt ist.

13. Mobiles Terminal (T₁) gemäß irgendeinem der Ansprüche 10 bis 12, **dadurch gekennzeichnet, dass** es einen Nebenstecker (20') umfasst, der das Ausgeben eines Versorgungssignals (PSU) an die Filtervorrichtung (30) zulässt.

## Claims

1. Filtering device (30) adapted to be connected to a portable mobile terminal (T₁) compatible with a Private Mobile Radiocommunications PMR network having a range of receiving frequencies B₁, said device comprising means for fastening (22, 23) to said mobile terminal (T₁), a first radio-frequency connector (21) adapted to engage with a radio-frequency connector (15) of the mobile terminal (T₁), a first channel (V₁) comprising a first filter (F₁) making it possible to reduce the interferences in a first useful band Bᵤ₁ at least for receiving included in the band B₁ and a second radio-frequency connector (16) intended for engaging with the removable RF antenna (10), to transmit or receive radio-frequency signals, **characterised in that** it further comprises:
• a second channel (V2) comprising a second filter (F2) making it possible to reduce the interferences in a second useful band Bᵤ₂ for emitting or receiving, said second useful band Bᵤ₂ being included in the first band B₁;
• a control interface (25, 20) adapted for engaging with a connector (20') of the mobile terminal (T1), the control interface (25, 20) delivering synchronisation data (S1) making it possible to activate a set of switches (C1, C2) engaging the switching from the first channel (V1) to the second channel (V2) and reciprocally.

2. Filtering device (30) according to claim 1, **characterised in that** the first filter (F₁) and/or the second filter (F₂) is a band-pass filter of which the mask is adapted to one of the useful bands Bᵤ₁ or Bᵤ₂.

3. Filtering device (30) according to claim 1, **characterised in that** the first filter (F₁) and/or the second filter (F₂) is a notch filter of a band close to one of the useful bands Bᵤ₁ or Bᵤ₂.

4. Filtering device (30) according to any of claims 1 to 3, **characterised in that** the second channel (V₂) is used to emit RF signals coming from the first radio-frequency connector (21', 21), with the selecting of each one of the channels (V₁, V₂) of the filtering device (30) being controlled by the set of switches (C₁, C₂), the switches being synchronised by means of the synchronisation signal (S₁) coming from the control interface (25).

5. Filtering device (30) according to claim 4, **characterised in that** the second channel (V₂) comprises a frequency isolator making it possible to isolate the second channel (V₂) from the intermodulation products between the amplified signals emitted and the signals received by the filtering device (30).

6. Filtering device (30) according to any of claims 1 to 5, **characterised in that** each channel (V₁, V₂) is used to emit and receive RF signals coming from or to the terminal mobile (T₁), with the selecting of the active channel (V₁, V₂) in emission and in reception being determined by means of the synchronisation signal (S₁) coming from the control interface (25).

7. Filtering device (30) according to any of claims 1 to 6, **characterised in that** it comprises a power supply interface (26) with the terminal mobile (T₁) that makes it possible to receive a power supply signal (PSU) that makes it possible to power at least one component (C1, C2) of said filtering device (30).

8. Filtering device (30) according to claim 7, **characterised in that** the signals of the power supply interfaces (26) and of the control interface (25) are conveyed by means of the same connector (20) of the filtering device (30).

9. Filtering device (30) according to any of claims 1 to 8, **characterised in that** it comprises a third channel for receiving a GPS signals via the antenna (10).

10. Terminal mobile (T₁) **characterised in that** it comprises at least two RF connectors (15, 21'), of which a first connector (15) makes it possible to fix a RF antenna (11, 10) in order to be compatible with a PMR network having a band of receiving frequencies B₁ and a second connector (21') adapted for engaging with a connector (21) of a filtering device (30) according to any of claims 1 to 9.

11. Terminal mobile (T₁) according to claim 10, **characterised in that** it comprises a first mode referred to as "relayed mode", with the relayed mode defining a first useful band Bᵤ₁ for the receiving of signals and a second useful band Bᵤ₂ for the emitting of signals in the band B1, each useful band Bᵤ₁ and Bᵤ₂ being respectively assigned one of the two channels (V₁, V₂) of the filtering device (30), the terminal mobile (T₁) emitting a synchronisation signal (S₁) to the first and second switches (C1, C2) in such a way as to select in real time the channel corresponding to the emission or the reception in progress.

12. Terminal mobile (T₁) according to claim 10, **characterised in that** it comprises a second mode referred to as "direct mode", with the direct mode defining a third useful band Bᵤ₃ for the emitting and the receiving of RF signals, the third useful band Bᵤ₃ being assigned one of the two channels (V₁, V₂) of the filtering device (30), the terminal mobile (T₁) emitting a synchronisation signal (S₁) to the first and second switches (C1, C2) in such a way as to select the corresponding channel in order to establish the communication.

13. Terminal mobile (T₁) according to any of claims 10 to 12, **characterised in that** it comprises an accessorial connector (20') making it possible to deliver a power supply signal (PSU) to the filtering device (30).
